Europäisches Patentamt

European Patent Office

Office européen des brevets

(11) Veröffentlichungsnummer: **0 183 128**

**A2**

(12) # EUROPÄISCHE PATENTANMELDUNG

(21) Anmeldenummer: **85114369.3**

(22) Anmeldetag: **12.11.85**

(51) Int. Cl.⁴: **G 03 H 1/04**
**G 02 B 5/32**

(30) Priorität: **29.11.84 DE 3443572**

(43) Veröffentlichungstag der Anmeldung:
**04.06.86 Patentblatt 86/23**

(84) Benannte Vertragsstaaten:
**AT BE CH DE FR GB IT LI LU NL SE**

(71) Anmelder: **ESG Elektronik-System- Gesellschaft mbH**
**Vogelweideplatz 9**
**D-8000 München 80(DE)**

(72) Erfinder: **Dausmann, Günter**
**Schlachthausstrasse 9**
**D-8058 Erding(DE)**

(72) Erfinder: **Gnädig, Klaus, Dr.**
**Dreimühlenstrasse 7**
**D-8000 München 5(DE)**

(74) Vertreter: **Weickmann, Heinrich, Dipl.-Ing. et al,**
**Patentanwälte Dipl.-Ing. H.Weickmann Dipl.-Phys.Dr.**
**K.Fincke Dipl.-Ing. F.A.Weickmann Dipl.-Chem. B. Huber**
**Dr.-Ing. H. Liska Dipl.-Phys.Dr. J. Prechtel Möhlstrasse 22**
**D-8000 München 80(DE)**

(54) Verfahren und Einrichtung zur holographischen Aufnahme von Objekten, insbesondere Mikrofilmen.

(57) Eine optische Anordnung zur Herstellung eines Holog-ramms eines Mikrofilms (12) auf einem Hologrammträger (16) weist ein Beleuchtungshologramm (24) auf, welches als Strahlteiler wirkt und den Referenzstrahl (18) vom Beleuch-tungsstrahl (21) trennt. Am Orte des Mikrofilms (12) rekon-struiert der Beleuchtungsstrahl (21) die Rekonstruktion (22) des Beleuchtungshologramms (824), welche einer Matt-scheibe, einem Linien- oder Punktgitter bezüglich Amplitude oder Phase, oder dergleichen entspricht. Der Mikrofilm (12) kann so mit vorgegebener Intensitäts- und Phasenverteilung gleichmäßig und mit statistischer Phase ausgeleuchtet werden, so daß man auf dem Haupthologrammträger (16) ein Hologramm relativ geringer Dynamik erhält.

FIG.1

PATENTANWÄLTE   DIPL.-ING. H. WEICKMANN, DIPL.-PHYS. DR. R. FINCKE
DIPL.-ING. F. A.WEICKMANN, DIPL.-CHEM. B. HUBER
DR.-ING. H. LISKA  , Dipl.-Phys. Dr. J. Prechtel

0183128

8000 MÜNCHEN 86
POSTFACH 860 820
MÜHLSTRASSE 22
TELEFON (089) 98 03 52
TELEX 5 22 621
TELEGRAMM PATENTWEICKMANN MÜNCHEN

PRAAN

ESG Elektronik-System GmbH

Vogelweideplatz 9

8000 München    80

Verfahren und Einrichtung zur holographischen Aufnahme von
Objekten, insbesondere Mikrofilmen

Die Erfindung betrifft ein Verfahren zur holographischen
Aufnahme von Objekten, insbesondere Mikrofilmen.

Bei der Beleuchtung von transparenten oder reflektierenden Objekten mit einem parallelen oder auch divergierenden oder konvergierenden Beleuchtungsstrahl ergibt sich das Problem, daß die genau festgelegte Phasenbeziehung des Beleuchtungsstrahls über seinen Querschnitt (ebenen Welle im Falle eines Parallelstrahls), bei der Interferenz mit dem Referenzstrahl auf dem Haupthologrammträger Bereiche mit stark überhöhter Schwärzung und andere mit wesentlich geringerer Schwärzung erzeugt. Die lichtempfindliche Schicht des Haupthologrammträgers muß diese unterschiedlichen Schwärzungsgrade (Dynamikunterschiede) verkraften. Eine Beleuchtung des Objekts mit einem Beleuchtungsstrahl mit über den Querschnitt statistischer Phase würde die Dynamikprobleme wesentlich verringern. Stellt man hierzu in den Beleuchtungsstrahl beispielsweise eine Mattscheibe, so erhält man zwar die gewünschte statistische Phasenverteilung; da jeder Punkt der körperlichen

0183128

Mattscheibe die Quelle einer Kugelwelle in den sich an die Mattscheibe anschließenden Halbraum bildet, und somit jeder Punkt des Haupthologrammträgers von sämtlichen Punkten der Mattscheibe Strahlen empfängt, ergeben sich hier Probleme bezüglich der räumlichen Kohärenz, die allenfalls mit streng kohärenten Strahlungsquellen, nämlich entsprechend aufwendigen Lasern, gelöst werden können. Lichtquellen mit schlechter Kohärenz, wie z.B. Entladungslampen oder blitzlampen-gepumpte Farbstofflaser sind im allgemeinen nicht einsetzbar.

Die Aufgabe der Erfindung liegt demgegenüber darin, ein Verfahren zur holographischen Aufnahme von Objekten, insbesondere Mikrofilmen, bereitzustellen, welches bei relativ geringen Anforderungen an die Strahlkohärenz die Beleuchtung des Objekts mit einem Beleuchtungsstrahl mit in einem weiten Bereich vorbestimmbarer Intensität · und Phasenverteilung über den Beleuchtungsstrahlquerschnitt erlaubt.

Diese Aufgabe wird dadurch gelöst, daß man das Objekt mit der Rekonstruktion eines Hologramms (Beleuchtungs-Hologramm) beleuchtet. Das Objekt kann hierbei insbesondere mattscheibenartig beleuchtet werden, also mit einer über den Querschnitt gleichmäßigen Intensitätsverteilung und ggf. mit über den Querschnitt statistischer Phasenverteilung. Man kann das Objekt auch rasterartig in Bezug auf die Amplitude und/oder Phase (Linienraster, Punktraster oder dergl.) beleuchten. Die mattscheiben- oder rasterartige Rekonstruktion mit angenähert statistischer oder rasterartiger Phasenverteilung über den Querschnitt führt im Gegensatz zu einer körperlichen Matt- oder Rasterscheibe an diesem Orte nicht zu Kohärenzproblemen, da von den Raumpunkten der Rekonstruktion keine Kugelwellen ausgehen, sondern entsprechend dem jeweiligen Strahlenverlauf Parallelstrahlen bzw. Strahlen mit geringer Divergenz oder Konvergenz.

Die Punkte des Objekts werden also mit gerichteten Beleuchtungsstrahlen beleuchtet und geben dementsprechend wohldefinierte reflektierte oder gebeugte Strahlen als Objektstrahlen ab.

In Weiterbildung der Erfindung wird vorgeschlagen, daß man den Referenzstrahl von dem als Strahlteiler ausgebildeten Beleuchtungshologramm ableitet. Unter Beleuchtungshologramm wird hier die die Beugungsstruktur enthaltende Platte, z.B. entwickelte Filmplatte oder Reliefplatte (z.B. Thermoplast-Film) verstanden. Man erspart sich hierdurch nicht nur einen gesonderten Strahlteiler sondern ermöglicht auch die Bereitstellung einer Rekonstruktion mit der gewünschten, z.B. gleichmäßigen Intensitätsverteilung über den Querschnitt. Wird das Beleuchtungshologramm mit einem Strahl mit der üblichen Gauß'schen Intensitätsverteilung über den Querschnitt beleuchtet, so kann die Hologrammstruktur ohne weiteres derart festgelegt werden, daß ihre Rekonstruktion die gewünschte gleichmäßige Intensitätsverteilung über den Querschnitt aufweist. Würde man dagegen einen herkömmlichen Strahlteiler einsetzen und eine körperliche Matt- oder Rasterscheibe zwischen Strahlteiler und Objekt einfügen, so ergäbe sich neben dem eingangs behandelten Kohärenzproblem auch noch das Problem der ungleichmäßigen Intensitätsverteilung. Der Strahlteiler würde nämlich die Mattscheibe mit einem Strahl mit Gauß'scher Intensitätsverteilung über den Querschnitt beleuchten.

Besonders bevorzugt ist der Einsatz eines Fourier-Hologramms als Beleuchtungshologramm. Derartige Hologramme sind, insbesondere auch synthetisch herstellbar und können zusätzlich die Dynamikprobleme in der lichtempfindlichen Schicht des Haupthologrammträgers reduzieren. Fourier-Hologramme können eine gleichmäßige Schwärzung über die Fläche aufweisen und die Dynamikanforderungen minimalisieren (Akito Iwamoto, Appl. Optics 19, p.215,1980). Auch führt eine lokale Störung, z.B. Kratzer oder Schmutz auf dem Hologramm im allgemeinen nur zu einer geringfügigen Verschlechterung der Rekonstruktion.

Die Erfindung betrifft ferner eine Einrichtung zur Durchführung des genannten Verfahrens, welche gekennzeichnet ist durch eine optische Anordnung mit einer ersten Teilanordnung zur Projektion des vom ggf. als Strahlteiler ausgebildeten Beleuchtungshologramms ausgehenden Referenzstrahls auf einen lichtempfindlichen Haupthologrammträger und mit einer zweiten Teilanordnung, die den vom von der Rekonstruktion beleuchteten Objekt ausgehenden Objektstrahl auf den Haupthologrammträger wirft. Teile der optischen Anordnung können herkömmliche Linsen oder auch HOE ( holographische optische Elemente) sein. Den Teilanordnungen können Linsen oder andere HOE gemeinsam sein, wobei in den meisten Fällen jedoch eine getrennte Strahlenführung von Vorteil ist, um die Rekonstruktion des Haupthologramms zu erleichtern. Mit einer im folgenden noch zu beschreibenden Maßnahme erreicht man jedoch, daß man auch bei einer Gabor-Anordnung eine gut beobachtbare Konstruktion des Haupthologramms erhält.

Um Strahlungsverluste anschließend an das Objekt gering zu halten, wird vorgeschlagen, eine Sammellinse zwischen Objekt und Haupthologrammträger vorzusehen.

Es können auch mehr oder weniger polychromatische Lichtquellen verwendet werden, wenn die optische Anordnung achromatisch ausgebildet ist. Um die Kohärenzanforderungen möglichst gering zu halten, wird vorgeschlagen, daß die optische Anordnung das Beleuchtungshologramm auf den Haupthologrammträger abbildet. Zur Reduzierung von Weglängendifferenzen ist es in diesem Falle sehr vorteilhaft, wenn Referenz- und Objektstrahl die gleichen optischen Elemente durchlaufen.

In Weiterbildung der Erfindung wird vorgeschlagen, daß das Beleuchtungshologramm ein Fourier-Hologramm ist, daß eine erste Sammellinsenanordnung vorgesehen ist zur Rekonstruktion des Fourier-Hologramm in der das Objekt enthaltenden Brennebene, und daß eine zweite Sammellinsenanordnung vorgesehen ist, welche den Objektstrahl auf den in der Brennebene der zweiten Sammellinsenanordnung angeordneten Haupthologrammträger wirft.

Abweichend hiervon kann vorgesehen sein, daß die optische Anordnung den Referenzstrahl als Parallelstrahl, oder als konvergenten oder divergenten Strahl auf den Haupthologrammträger wirft.

Die erste Linsenanordnung kann dann entfallen, wenn diese bereits bei der Aufnahme bzw. Berechnung des Beleuchtungshologramms berücksichtigt ist.

Der Referenzstrahl kann parallel oder schräg zur optischen Achse der optischen Anordnung verlaufen und dementsprechend der Objektstrahl schräg oder parallel. Es ist auch denkbar, daß beide Strahlen schräg zur optischen Achse verlaufen. Die jeweilige Auswahl hängt von den Platzverhältnissen, insbesondere den Größenverhältnissen von Objekt und Haupthologrammträger ab.

Wie zuerst bereits angesprochen, kommt prinzipiell auch eine Gabor-Anordnung in Frage, d.h. mit längs der optischen Achse verlaufendem Referenz- und Objektstrahl. Für diesen Fall, jedoch auch generell für den Fall einer Gabor-Anordnung mit beliebig beleuchtetem Objekt, wird vorgeschlagen, zwischen Objekt und Haupthologrammträger ein holographisches optisches Element (HOE), vorzugsweise unmittelbar vor dem Haupthologrammträger, vorzusehen, welches nach Art eines Strahlteilers das das Element betreffende Wellenfeld aufteilt und in zwei unterschiedlichen Strahlrichtungen abgibt, wobei beide Teilstrahlen auf den Haupthologrammträger auftreffen. Bei der Rekonstruktion herkömmlicher Gabor-Hologramme ergibt sich das Problem, daß sowohl der Strahl nullter Ordnung als auch die beiden konjugierten Bilder auf der optischen Achse liegen. Bei der erfindungsgemäßen Lösung ergeben sich aufgrund der Strahlteilung mehrere Interferenzmuster auf dem Haupthologrammträger. Betrachtet man bei der Hologrammrekonstruktion die Rekonstruktion des Strahlenfelds des in der einen Richtung abgelenkten Referenzstrahls mit dem nicht oder in der anderen Richtung abgelenkten Objektstrahl, so ergibt sich die gewünschte Verschiebung der Rekonstruktion aus dem Bereich der optischen Achse. Wird das holographische optische Element entsprechend einer bevorzugten Weiterbildung der Erfindung von einem Strichgitter gebildet, so ergibt sich ein besonders gut nutzbares rekonstruiertes Bild aus der Interferenz des Referenzstrahles erster Ordnung mit dem Objektstrahl nullter Ordnung.

Das holographische optische Element kann auch von einer Fresnel'schen Zonenplatte oder dergleichen gebildet sein. Schließlich kommt auch allgemein ein Hologramm als holographisches optisches Element in Frage, dessen vom Referenzstrahl erzeugte Rekonstruktion einen zur optischen Achse der Gabor-Anordnung geneigten parallelen oder konvergierenden oder divergierenden Referenzstrahl liefert.

Die Erfindung wird im folgenden an bevorzugten Ausführungsbeispielen anhand der Zeichnung erläutert.

Es zeigen:

Fig. 1    eine Schemaansicht einer ersten erfindungsgemäßen Ausführungsform einer Einrichtung zur Erzeugung eines Haupthologramms von einem holographisch ausgeleuchteten Mikrofilm in Fourier-Anordnung;

Fig. 1A    das Detail A in Fig. 1;

Fig. 2    eine zweite Ausführungsform mit parallelem
          Referenzstrahl;

Fig. 3    eine weitere Ausführungsform mit divergentem
          Referenzstrahl;

Fig. 4    eine weitere Ausführungsform in Gabor-Anordnung;

Fig. 5    eine weitere Ausführungsform mit zur Achse der
          optischen Anordnung geneigtem Referenzstrahl;

Fig. 6    eine weitere Ausführungsform mit zur optischen
          Achse geneigtem Referenz- und Objektstrahl;

Fig. 7    eine vereinfachte Darstellung einer erfindungsgemäßen Gabor-Anordnung mit vor dem Haupthologrammträger angeordnetem Strahlteiler;

Fig. 8    eine weitere, vereinfachte Ausführungsform einer
          Gabor-Anordnung mit Strahlteiler.


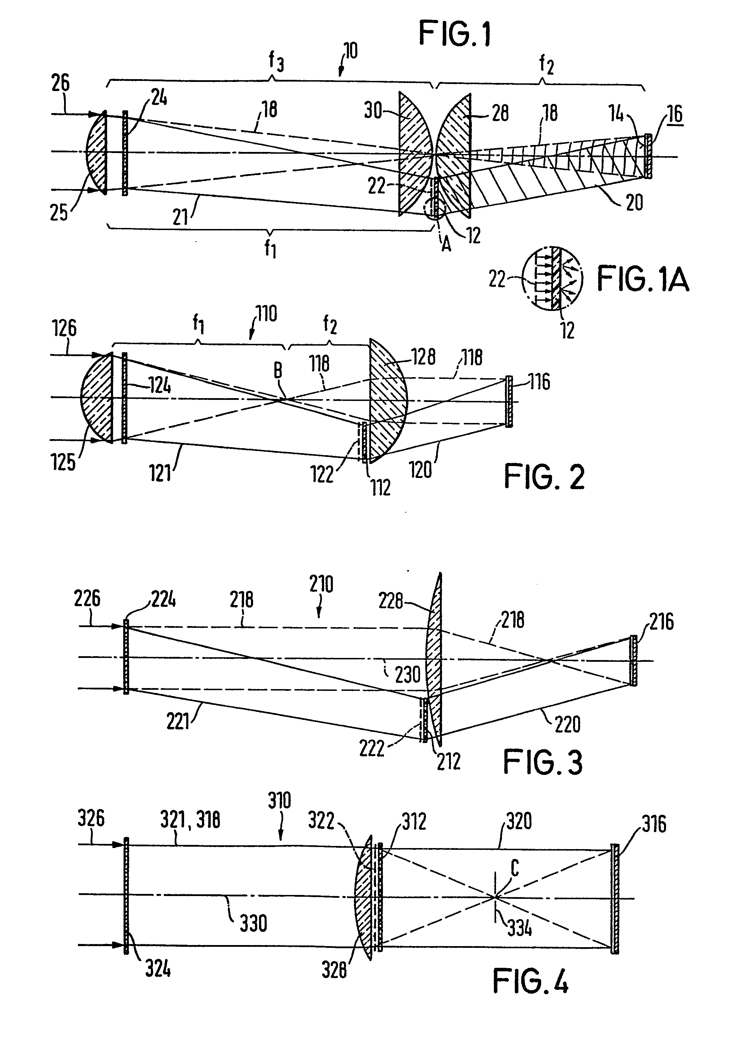

Mit Hilfe der in Fig. 1 dargestellten Anordnung 10 wird von einem Mikrofilm 12 in der lichtempfindlichen Schicht 14 eines Haupthologrammträgers 16 ein Hologramm aufgenommen. Der Referenzstrahl ist mit 18 bezeichnet, der vom Mikrofilm 12 ausgehende Objektstrahl mit 20. Anstelle eines Mikrofilmes kommen andere lichtdurchlässige Objekte in Frage. Bevorzugt ist jedoch der Einsatz in Verbindung mit Mikrofilmen, da die holographische Speicherung von Mikrofilmen, beispielsweise gemäß der deutschen Offenlegungsschrift 32 23 650, die Abspeicherung großer Datenmengen mit schnellem Zugriff erlaubt. Der Mikrofilm 12 wird in besonderer Weise ausgeleuchtet, nämlich durch die Rekonstruktion 22 eines Beleuchtungshologramms 24. Die Rekonstruktion ( reelles Bild) ist in den Fig. 1 bis 6 strichliert angedeutet. Das Beleuchtungshologramm 24 dient gleichzeitig als Strahlteiler und gibt demzufolge sowohl den Referenzstrahl 18 (ungebeugt) als auch einen Beleuchtungsstrahl 20 ab, welcher über die Rekonstruktion 22 den Mikrofilm 12 beleuchtet. Das Beleuchtungshologramm 24 ist ein Fourier-Hologramm. Zu seiner Rekonstruktion wird folglich eine erste Linsenanordnung (Sammellinse) 25 eingesetzt, welche mit einem Parallelstrahl 26 beleuchtet wird und auf welche in Strahlrichtung das Beleuchtungshologramm 24 folgt. In der Ebene (Brennweite $f_1$ der Sammellinse) rekonstruiert folglich das Beleuchtungshologramm. Entsprechend der Richtung des Beleuchtungsstrahls 21 wird der Mikrofilm 12 von Parallelstrahlen oder schwach konvergierenden Lichtstrahlen beleuchtet, wie in Fig. 1A schematisch angedeutet ist. Das Beleuchtungshologramm 24 kann derart aufgebaut sein. (insbesondere durch entsprechende Berechnung bei einem synthetisch erzeugten Hologramm), daß die Rekonstruktion 22 eine gleichmäßige Beleuchtungsstrahlintensität über ihre Fläche aufweist mit angenähert statistischer Phasenverteilung. Dementsprechend wird der Mikrofilm 12 über seine Flächen gleichmäßig ausgeleuchtet. Das von dem Mikrofilm 12 ausgehende Wellenfeld (Objektstrahl 20) interferiert in der lichtempfindlichen Schicht 14 mit dem Referenzstrahl 18. Aufgrund der statistischen Phasenverteilung der von den Punkten des Objekts ausgehenden gebeugten Wellen ergibt sich ein Interferenzmuster mit angenähert gleichmäßiger Schwärzung über die Fläche. Die Dynamikanforderungen an die Schicht 14 sind folglich relativ niedrig. Das so erzeugte Hologramm auf dem Haupthologrammräger ist wiederum ein Fourier-Hologramm, da sich der Haupthologrammträger in der Brennebene einer dem Mikrofilm 12 im Strahlengang nachgeschalteten zweiten Linsenanordnung (Sammellinse) 28 mit Brennweite $f_2$ befindet. Zusammen mit einer weiteren Sammellinse 30 mit Brennweite $f_3$ werden zusätzlich die Bedingung für eine optische Abbildung des Beleuchtungshologramms 24 in die Ebene des Haupthologrammträgers erfüllt. Dies minimalisiert die Kohärenzanforderungen.

Sind die Linse 25 und das aus den Linsen 28 und 30 bestehende Abbildungssystem achromatisch ausgeführt, so darf der Ausgangsstrahl 26 mehr oder weniger polychromatisch sein. Ferner darf der Strahl 26 auch eine z.B. Gauß'sche Intensitätsverteilung über seinen Querschnitt besitzen, da das Abbildungshologramm 24 derart berechnet werden kann, daß es diese Intensitätsteilung gerade kompensiert und in der Rekonstruktion 22 konstante Intensitätsverteilung über den Querschnitt liefert.

Anstelle eines in der Rekonstruktion eine mattscheibe-ähnliche Abbildung liefernden Hologramms kommen andere Hologramme in Frage, die das Objekt (Mikrofilm 12) mit einem Beleuchtungsstrahl vorbestimmter Intensitäts- und Phasenverteilung über den Querschnitt beleuchten. Ein Beispiel hierfür ist die Beleuchtung des Mikrofilms mit einem Strich- oder Punkt-Raster.

Das Beleuchtungshologramm ist nicht notwendigerweise ein Fourier-Hologramm. In der Anordnung 110 gemäß Fig. 2 ist ein Nicht-Fourier-Hologramm eingesetzt. Bauelemente in Fig. 2, die ihrer Funktion nach solchen in Fig. 1 entsprechen, sind mit denselben Bezugsziffern, jeweils vermehrt um die Zahl 100 versehen. Die im Strahlengang erste Linse 125 wird wiederum mit einem Ausgangsstrahl 126 (Parallelstrahl) beleuchtet. Das Beleuchtungshologramm 124 teilt den Beleuchtungsstrahl 121 vom Referenzstrahl 118 ab. Eine zweite Linse 128 (Brennweite $f_2$) hat einen Brennpunkt B gemeinsam mit der ersten Linse 125 (Brennweite $f_1$). Die Linse 128 gibt folglich den Referenzstrahl 118 als Parallelstrahl ab, um auf dem Haupthologrammträger 116 mit dem vom Mikrofilm 112 abgegebenen Objektstrahl 120 zu interferieren. Am Orte des Mikrofilms 112 befindet sich die Rekonstruktion 122 des Beleuchtungshologramms 124.

In Fig. 3 ist eine mit 210 bezeichnete weitere Ausführungsform dargestellt, welche lediglich mit einer Linse 228 auskommt. Auch hier sind wiederum Bauelemente, die ihrer Funktion nach solchen in Fig. 1 entsprechen, mit denselben Bezugsziffern, vermehrt um die Zahl 100, versehen. Die Linse 25 bzw. 125 entfällt hier, da diese bereits bei der Aufnahme bzw. Synthetisierung des Beleuchtungshologramms 224 berücksichtigt ist. Das Beleuchtungshologramm 224 wird demnach mit einem Parallelstrahl 226 beleuchtet und teilt diesen auf in den weiterhin als Parallelstrahl verlaufenden Referenzstrahl 218 parallel zur optischen Achse 230 und in den Beleuchtungsstrahl 221, welcher im Bereich des Mikrofilms 212 die Rekonstruktion 222, z.B. einer Mattscheibe, liefert. Die sich an den Mikrofilm 212 anschließende Linse 228 wirft sowohl den vom Mikrofilm 212 ausgehenden Strahl 220 als auch den Referenzstrahl 218 überdeckend auf den Haupthologrammträger 216.

In Fig. 4 ist eine mit 310 bezeichnete Gabor-Anordnung dargestellt, bei welcher sowohl der Referenzstrahl 318 als auch der Beleuchtungs- bzw. Objektstrahl 320, 321 parallel zur optischen Achse 330 verlaufen. Das von einem Parallelstrahl 326 beleuchtete Beleuchtungshologramm 324 bewirkt hier also keinen getrennt verlaufenden Strahlengang von Objekt- und Referenzstrahl. Die Rekonstruktion 322 des Beleuchtungshologramms 324 wird im Bereich des Mikrofilms 312 erzeugt. Eine im Strahlengang hinter der Rekonstruktion 322 vorgesehene Sammellinse 328 bildet das Beleuchtungshologramm 324 auf dem Haupthologrammträger 316 ab. Im Brennpunkt C der Linse 328 treffen sich sämtliche Strahlen des Referenzstrahls 318. Die durch den Mikrofilm 312 abgebeugten Strahlen des Objektstrahls 320 bilden eine Art Hof 334 rund um den Brennpunkt C. Aufgrund der relativ groben Strukturen des Mikrofilms 312 ist die Intensität dieses Hofes bei dieser Anordnung gering. In dieser zur optischen Achse 330 vollkommen symmetrischen Anordnung ergeben sich zwar ver-

-11-

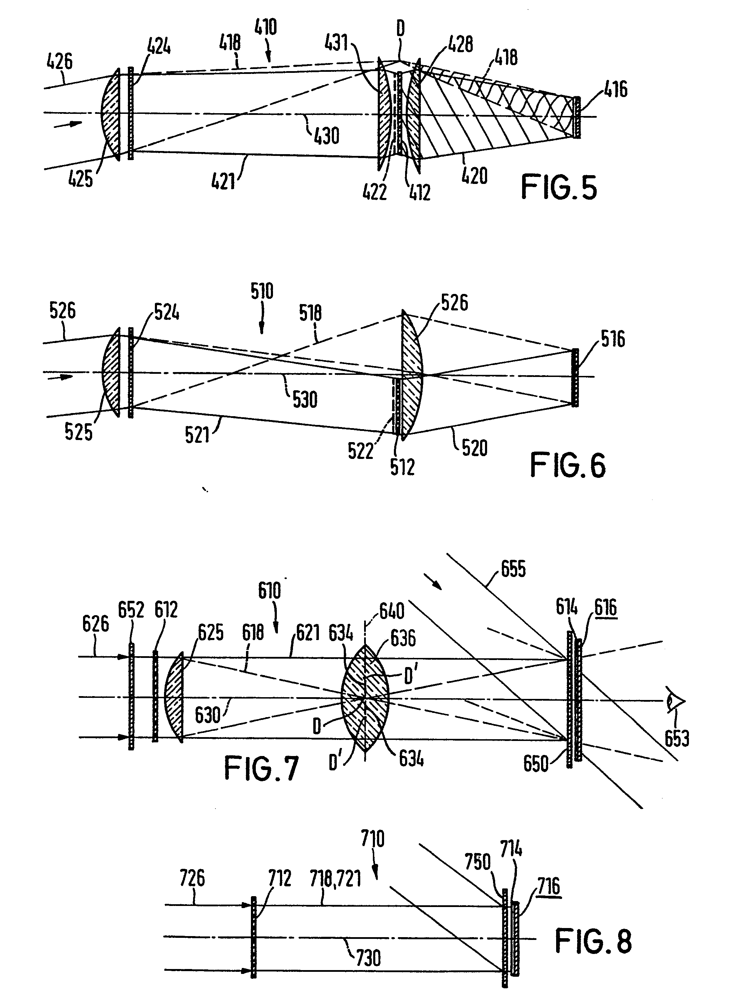

minderte Kohärenzprobleme mit dem Vorteil eines minimalen Mindestdurchmessers der optischen Elemente; bei der Rekonstruktion des Haupthologramms auf den Haupthologramm - träger 316 liegen jedoch auch die nullte Ordnung des Beleuchtungsstrahls sowie der beiden zueinander konjugierten Bilder auf dieser Achse 330, was deren Beobachtung erschwert. Die später noch anhand der Fig. 7 und 8 zu beschreibenden Maßnahmen beseitigen letzteres Problem. Die Gabor-Anordnung 310 ergibt bei Amplitudenobjekten dann gute Ergebnisse, wenn das Objekt überwiegend transparente Bereiche aufweist.

In den Fig. 5 und 6 sind zwei weitere Ausführungsformen mit holographischer Beleuchtung eines Mikrofilms gezeigt, bei welchen, im Gegensatz zu den Fig. 1 bis 4, der jeweilige Referenzstrahl geneigt zur optischen Achse verläuft, um Raum zu schaffen für das nunmehr relativ großformatige Objekt (Mikrofilm). Die Fig. 5 zeigt eine Anordnung 410,in welcher wiederum Bauelemente, die ihrer Funktion nach solchen in Fig. 1 entsprechen, mit denselben Bezugsziffern, jeweils vermehrt um die Zahl 400, versehen sind. Man erkennt den relativ großen Mikrofilm 412, der hier zentrisch zur optischen Achse 430 liegt und um einiges größer ist als der ebenfalls in der optischen Achse liegende Haupthologrammträger 416. Die Linsenanordnung aus den Linsen 425, 431 und 428 entspricht der der Fig. 1. Der Ausgangsstrahl 426, welcher die erste Linse 425 beleuchtet, ist jedoch ein zur optischen Achse 430 geneigt verlaufender Parallelstrahl. Der vom Beleuchtungshologramm 424 ungeändert hindurchgelassene Referenzstrahl 418 fokussiert folglich in einem Punkt D außerhalb der optischen Achse 430 und außerhalb des Mikrofilms 412. Das als Strahlteiler wirkende Beleuchtungshologramm 424 gibt einen zur Achse 430 zentrischen Beleuchtungsstrahl 421 ab, welcher dem Mikrofilm 412 die Rekonstruktion 422 des Hologramms 424 liefert. Der vom auf diese Weise gleichmäßig ausgeleuchteten Mikrofilm 412 abgegebene Objektstrahl 420 interferiert mit dem Referenzstrahl 418 auf dem Haupthologrammträger 416.

Die in Fig. 6 dargestellte Ausführungsform 510 entspricht weitgehend der Ausführungsform 110 gemäß Fig. 2. Bauelemente, die ihrer Funktion nach solchen in Fig. 2 entsprechen, sind mit denselben Bezugsziffern, jeweils vermehrt um die Zahl 500 versehen. Abweichend von Fig. 2 wird die erste Linse 525 mit einem zur optischen Achse 530 geneigten Parallelstrahl 526 beleuchtet. Das auf diese Linse folgende Beleuchtungshologramm 524 gibt als Strahlteiler einen Referenzstrahl 518 ab, welcher von der zweiten Linse 528 als zur Achse 530 geneigter Parallelstrahl auf den Haupthologrammträger 516 geworfen wird. Der vom Beleuchtungshologramm 524 ebenfalls abgegebene Beleuchtungsstrahl 521 verläuft geneigt zur optischen Achse 530 und zwar in Fig. 6 nach rechts unten, wohingegen der Referenzstrahl 518 nach recht oben verläuft. Im Bereich des Mikrofilms 512 erzeugt der Beleuchtungsstrahl 521 die Rekonstruktion 522 zur gleichmäßigen Ausleuchtung des Mikrofilms 512 mit statistischer Phasenverteilung. Der vom Mikrofilm 512 abgegebene Objektstrahl 520 interferiert auf dem Haupthologrammträger 516 mit dem Referenzstrahl 518.

In Fig. 7 ist eine Anordnung 610 dargestellt zur Erzeugung eines Hologramms auf einem Hologrammträger 616 mit lichtempfindlicher Schicht 614. Es handelt sich hierbei um eine Gabor-Anordnung, also um eine Anordnung, bei welcher sowohl der Referenzstrahl 618 als auch der Objektstrahl 621 konzentrisch zur optischen Achse 630 verlaufen. Das lichtdurchlässige Objekt, hier ein Mikrofilm 612, befindet sich in Strahlrichtung hinter einer ersten Sammellinse 625, deren Brennebene mit 640 bezeichnet ist. Der von einem parallelen Beleuchtungsstrahl 626 beleuchtete Mikrofilm 612 läßt zum einen einen ungebeugten, den Referenzstrahl 618 bildenden Strahl durch, welcher im Brennpunkt D fokussiert, zum anderen einen abgebeugten Strahl, den Objektstrahl 621, welcher einen Hof 634 ringsum den Brennpunkt D erzeugt. Eine zweite Linse 636 bildet den Mikrofilm 612 geometrisch optisch auf den Haupthologrammträger 616 ab, um die Lichtverluste gering zu halten. Wie die in Fig. 8 dargestellte Ausführungsform 710 zeigt, können die Linsen unter Umständen auch entfallen. In Fig. 8 gibt der von einem Parallelstrahl 726 beleuchtete Mikrofilm 712 wiederum sowohl, ungebeugt, den Referenzstrahl 718 ab als auch, gebeugt, den Objektstrahl 721. Beide Strahlen interferieren auf dem Haupthologrammträger 716.

Die Gabor-Anordnung gemäß Fig. 7 und 8 zeichnet sich durch besondere Einfachheit und geringe Kohärenzprobleme aus. Ein schwerwiegender Nachteil der bisherigen Gabor-Hologramme liegt jedoch darin, daß bei der Rekonstruktion sowohl die nullte Ordnung als auch die konjugierten Bilder auf der optischen Achse liegen. Um dies zu vermeiden, befindet sich unmittelbar vor dem Haupthologrammträger ein Strahlteiler 650 (Fig.7) bzw. 750 (Fig.8) in Form eines Strichgitters, einer Fresnel'schen Zonenplatte oder allgemein eines entsprechend rekonstruierenden Hologramms, welcher zusätzlich zum ungebeugt durchgelassenen Strahl nullter Ordnung einen abgebeugten Strahl auf den Haupthologrammträger 616 bzw. 716 wirft. Das aus dem Referenzstrahl und dem Objektstrahl zusammengesetzte, auf den Strahlteiler 650 bzw. 750 auftreffende Strahlungsfeld wird also dementsprechend aufgeteilt. In der lichtempfindlichen Schicht 614 bzw. 714 interferieren die verschiedenen Ordnungen des Referenzstrahls mit den verschiedenen Ordnungen des Objektstrahls.Der Strahlteiler 650 bzw. 750 kann derart ausgebildet sein, daß er höhere als die erste Ordnung stark abschwächt. Von Interesse ist die Interferenz der nullten Ordnung des Objektstrahls (vom Strahlteiler 650 bzw. 750 ungebeugt hindurchgelassen) mit der ersten Ordnung des Referenzstrahls. Bei der Rekonstruktion dieser Interferenzfigur mit Hilfe eines entsprechend der Neigung der ersten Ordnung zur optischen Achse 630 bzw. 730 einfallenden Rekonstruktionsstrahls 655 erscheint das Objekt dem Betrachter (Auge 653) virtuell am Aufnahmeort 612 bzw. 712, aber nun vom nicht dargestellten konjugierten Bild und vom Rekonstruktionsstrahl winkelmäßig entfernt und somit ohne Störung beobachtbar. Durch Beleuchtung der Interferenzfigur mit einem zur ersten Ordnung des Strahlteilers 650 bzw. 750 konjugierten Rekonstruktionsstrahl kann das Objekt reell am Ort 612 bzw. 712 rekonstruiert werden.

In Fig. 7 ist im Strahlengang hinter dem Mikrofilm 612 ein strichliert angedeutetes HOE-Element 652 eingesetzt, welches den Strahl 626 moduliert, insbesondere in der Weise, daß sich in der Brennebene 640 Nebenmaxima D' des Referenzstrahls 618 ausbilden mit dementsprechenden Höfen 634', die vom gebeugten Objektstrahl 618 herrühren.Das HOE-Element kann hierzu von einem Strichgitter gebildet sein. Durch entsprechende Gestaltung des HOE-Elements lassen sich bestimmte Haupt- oder Nebenmaxima D bzw. D' herausgreifen und andere unterdrücken. Häufig ist die Intensität des Referenzstrahls zum Vergleich zur Intensität des Objektstrahls zu groß. Durch entsprechende Hervorhebung und Unterdrückung der Haupt- und Nebenmaxima samt ihrer Höfe läßt sich eine Verbesserung dieses Verhältnisses erreichen.

Mit der vorstehend beschriebenen Anordnung lassen sich Hologramme, insbesondere Fourier-Hologramme von ebenen, transparenten Objekten (z.B. Mikrofiches) mit Lichtquellen relativ geringer Kohärenz (Impulslaser, Entladungslampen) herstellen. Man erhält eine gleichmäßige (oder gerasterte) Beleuchtung des Objektfeldes ohne Lichtverlust. Dynamikprobleme der Photoschicht, die bei der Holographie nichtdiffuser Objekte stets auftreten, werden durch die statische (oder gerastert staische) Phase des Objektbeleuchtungsfeldes weitgehend verringert. Durch entsprechende Gestaltung des Beleuchtungshologramms bzw. Strahlteilers läßt sich das Verhältnis der Intensität des Objektstrahls sowie des Referenzstrahls ohne Lichtverluste einstellen. Das Beleuchtungshologramm als Fourier-Hologramm einer Mattscheibe kann auch als bidirektionales statistisches Lineargitter mit konstantem Raumfrequenzspektrum zwischen unteren und oberen Grenzwerten angesehen werden. Es kann entweder durch unmittelbare holographische Aufnahme einer Mattscheibe gewonnen werden oder synthetisch erzeugt werden (Computerhologramm). Um ein größeres Objektfeld zu erhalten, ist ein Referenz-Strahlenverlauf schräg zur optischen Achse möglich.

PATENTANWÄLTE   DIPL.-ING. H. WEICKMANN, DIPL.-PHYS. DR. R. FINCKE
DIPL.-ING. F. A. WEICKMANN, DIPL.-CHEM. B. HUBER
DR.-ING. H. LISKA , Dipl.-Phys. Dr. J. Prechtel

PreIL

ESG Elektronik-System GmbH

Vogelweideplatz 9
8000 München 80

8000 MÜNCHEN 86
POSTFACH 860 820
MÜHLSTRASSE 22
TELEFON (089) 980352
TELEX 522621
TELEGRAMM PATENTWEICKMANN MÜNCHEN

1

Verfahren und Einrichtung zur holographischen Aufnahme von Objekten, insbesondere Mikrofilmen

## Patentansprüche

1. Verfahren zur holographischen Aufnahme von Objekten, insbesondere Mikrofilmen, dadurch g e k e n n z e i c h -
n e t , daß man das Objekt mit einer Rekonstruktion eines
Hologramms (Beleuchtungshologramm) beleuchtet.

2. Verfahren nach Anspruch 1, dadurch g e k e n n z e i c h -
n e t , daß die Rekonstruktion das Objekt mattscheibenartig beleuchtet.

3. Verfahren nach Anspruch 1, dadurch g e k e n n z e i c h -
n e t, daß die Rekonstruktion das Objekt rasterartig bezüglich Phase und/oder Amplitude beleuchtet.

4. Verfahren nach einem der vorhergehenden Ansprüche, dadurch
g e k e n n z e i c h n e t , daß man den Referenzstrahl
von dem als Strahlteiler ausgebildeten Beleuchtungsholo -
gramm ableitet.

5. Verfahren nach einem der vorhergehenden Ansprüche, **dadurch gekennzeichnet,** daß man ein Fourier-Hologramm als Beleuchtungshologramm einsetzt und vorzugsweise das Haupthologramm als Fourier-Hologramm herstellt.

6. Einrichtung zur Durchführung des Verfahrens nach einem der vorhergehenden Ansprüche, **gekennzeichnet** durch eine erste optische Teilanordnung (28,30) zur Projektion des jeweils vom Beleuchtungshologramm (24) ausgehenden Referenzstrahls (18) auf einen lichtempfindlichen Haupthologrammträger, eine zweite optische Teilanordnung (25) zur Erzeugung der Rekonstruktion (22) des Beleuchtungshologramms (24) im Bereich des Objekts und eine dritte optische Teilanordnung zur Projektion des vom Objekt (12) ausgehenden Objektstrahls (20) auf den Haupthologrammträger.

7. Einrichtung nach Anspruch 6, **dadurch gekennzeichnet,** daß die Teilanordnungen (25, 28, 30) achromatisch sind.

8. Einrichtung nach einem der vorhergehenden Ansprüche, **dadurch gekennzeichnet,** daß die optischen Teilanordnungen (25, 28, 30) das Beleuchtungshologramm (24) auf den Haupthologrammträger (16) abbilden, vorzugsweise mit Führung des Referenzstrahls (18) und des Objektstrahls (20) durch die selben optischen Elemente.

9. Einrichtung nach einem der Ansprüche 6 bis 8, **dadurch gekennzeichnet,** daß eine Sammellinse (28) zwischen Objekt (12) und Haupthologrammträger (16) vorgesehen ist.

10. Einrichtung nach einem der Ansprüche 6 bis 9, **dadurch gekennzeichnet,** daß das Beleuchtungshologramm (24) als Fourier-Hologramm ausgebildet ist, daß das Objekt in der Brennebene der zweiten Teilanordnung (25) angeordnet ist, und daß der Haupthologrammträger in der Brennebene der dritten optischen Teilanordnung (28) angeordnet ist. (Fig. 1).

11. Einrichtung nach einem der Ansprüche 6 bis 9, **dadurch gekennzeichnet,** daß die erste optische Teilanordnung (128) den Referenzstrahl (118) als Parallelstrahl auf den Haupthologrammträger (116) wirft (Fig. 2).

12. Einrichtung nach einem der Ansprüche 6 bis 9, **dadurch gekennzeichnet,** daß die erste optische Teilanordnung (228) den Referenzstrahl als konvergenten oder divergenten Strahl auf den Haupthologrammträger (216) wirft (Fig. 3).

13. Einrichtung nach einem der Ansprüche 6 bis 12, **dadurch gekennzeichnet,** daß die zweite Teilanordnung entfällt, da sie bei der Herstellung des Beleuchtungshologramms (224) entsprechend berücksichtigt ist.

14. Einrichtung nach einem der Ansprüche 6 bis 13, **dadurch gekennzeichnet,** daß der Referenzstrahl (18; 418) parallel oder schräg zur optischen Achse (230; 330; 430) der Teilanordnungen verläuft.

15. Einrichtung nach einem der Ansprüche 6 bis 14, **dadurch gekennzeichnet,** daß der Objektstrahl (20; 420; 520) schräg oder parallel zur optischen Achse (230; 430; 530) der Teilanordnungen verläuft.

16. Einrichtung nach einem der Ansprüche 6 bis 15, **dadurch gekennzeichnet,** daß der Referenzstrahl (318) durch das lichtdurchlässige Objekt (312) fällt (Gabor-Anordnung) (Fig. 4).

17. Einrichtung zur Aufnahme eines Haupthologramms in Gabor-Anordnung mit einem lichtdurchlässigen Objekt, insbesondere Mikrofilm, welcher von einem ggf. der Rekonstruktion eines Beleuchtungshologramms entsprechend einem der Ansprüche 1 bis 16 herrührenden Beleuchtungsstrahl beleuchtet wird und mit einer optischen Anordnung zur Projektion des vom Objekt ausgehenden Objekt- und Referenzstrahls auf einen Haupthologrammträger **gekennzeichnet** durch ein holographisches optisches Element (HOE) (650) zwischen Objekt (612) und Haupthologrammträger (616), vorzugsweise unmittelbar vor dem Haupthologrammträger, welches nach Art eines Strahlteilers das auf das Element treffende Wellenfeld in zwei Teilfelder unterschiedlicher Strahlrichtung aufteilt, von welche beide auf den Haupthologrammträger (616, 716) treffen.

18. Einrichtung nach Anspruch 17, dadurch gekennzeichnet, daß das holographische optische Element ein Strichgitter und/oder eine Fresnel'sche Zonenplatte ist.

19. Einrichtung nach Anspruch 18, dadurch gekennzeichnet, das das holographische optische Element (650) von einem Hologramm gebildet ist, dessen vom Referenzstrahl (618) erzeugte Rekonstruktion ein zur optischen Achse (630) der Gabor-Anordnung geneigter Referenzstrahl ist.

20. Einrichtung nach einem der Ansprüche 17 bis 19 gekennzeichnet durch einen Modulator (652) im Strahlengang vor dem Objekt (612), welches in einer Brennebene einer nachgeschalteten Linsenanordnung (625) in vorbestimmter Weise eine oder mehrere Haupt- und Nebenmaxima (D, D') des Referenzstrahls mit die Maxima umgebenden Höfen (634) des gebeugten Objektstrahls erzeugt.

0183128

# FIG.1

# FIG.1A

# FIG. 2

# FIG.3

# FIG.4

FIG.5

FIG.6

FIG.7

FIG.8